# EUROPÄISCHE PATENTANMELDUNG

(11) **EP 3 367 524 A1**
(43) Veröffentlichungstag der Anmeldung: **29.08.2018**
(21) Anmeldenummer: 17157386.8
(22) Anmeldetag: 22.02.2017
(51) Int. Cl.: H02G 3/08

(54) **BRANDSCHUTZEINLAGE FÜR ELEKTROMONTAGEDOSEN**

(71) Anmelder: HILTI Aktiengesellschaft, 9494 Schaan (LI)
(72) Erfinder: Münzenberger, Herbert, 65191 Wiesbaden (DE); Drexl, Michael, 86938 Schondorf (DE)
(74) Vertreter: Hilti Aktiengesellschaft Corporate Intellectual Property

(57) **Zusammenfassung**

Die Erfindung betrifft eine Einlage zum Brandschutz von mindestens einer Elektromontagedose mit einem Trägermaterial und einer intumeszierenden Schicht, wobei das Trägermaterial und die intumeszierende Schicht plastisch verformbar sind. Des Weiteren betrifft die Erfindung ein Verfahren zur Herstellung einer Einlage, sowie eine Elektromontagedose mit einer Einlage.

## Beschreibung

Die Erfindung betrifft eine Einlage als Brandschutz von Elektromontagedosen, mit einem Trägermaterial und mindestens einer intumeszierenden Schicht, sowie ein Verfahren zur Herstellung einer derartigen Einlage.

Für den Innenausbau von Gebäuden werden immer häufiger Trockenbauwände verwendet. Auch Brandschutzwände zum Verhindern einer Ausbreitung eines Feuers werden immer häufiger in Trockenbauweise hergestellt. Besonders kritisch hierbei sind die für Trockenbauwände verwendeten Elektromontagedosen.

Die zum Einbau der Elektromontagedosen notwendigen Wandöffnungen stellen eine Schwachstelle in den Trockenbauwänden dar, über die sich ein Feuer leicht in angrenzende Räume ausbreiten kann. Bei Zulassungsprüfungen werden die Elektromontagedosen in die Trockenbauwände eingegipst. Hierdurch kann eine Zulassungsprüfung positiv beeinflusst werden. In der Praxis ist dies üblicherweise nicht möglich, da die Montage der Trockenbauwände und der Elektromontagedosen meist zu unterschiedlichen Zeiten von unterschiedlichen Gewerken erfolgt.

Bisher ist in Europa jedoch für derartige Elektromontagedosen kein genormtes Brandschutzsystem vorhanden. Grund hierfür ist insbesondere die in Europa vorhandene Diversität der verschiedenen Elektromontagedosen unterschiedlicher Abmessungen und Gestaltung. Beispielsweise kommen länderspezifisch runde oder eckige Elektromontagedosen zum Einsatz. Derzeit in Europa eingesetzte Produkte, wie beispielsweise "Switch Box Insert" und "Switch Box Cover" der Fa. Tenmat sind nur auf einen Typ von Elektromontagedosen ausgelegt und nicht Systemübergreifend verwendbar.

Die Aufgabe der Erfindung besteht darin, den Brandschutz von unterschiedlichen Elektromontagedosen mit geringem Aufwand zu verbessern.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine Einlage als Brandschutz von mindestens einer Elektromontagedose bereitgestellt mit einem Trägermaterial und mindestens einer intumeszierenden Schicht, wobei das Trägermaterial und die intumeszierende Schicht plastisch verformbar sind. Die Erfindung beruht auf dem Grundgedanken, eine Elektromontagedose dadurch "zu ertüchtigen", dass sie mit einer Einlage versehen wird, die aufgrund des intumeszierenden Materials die gewünschten Brandschutzeigenschaften hat. Diese Einlage kann entweder in unterschiedlichen Abmessungen bereitgestellt werden, wobei in diesem Zusammenhang erkannt wurde, dass die Anzahl der in der Praxis verwendeten unterschiedlichen Abmessungen begrenzt ist. Daher kann mit einer recht geringen Anzahl unterschiedlichen Abmessungen der gesamte Markt abgedeckt werden. Alternativ kann die Einlage vor Ort auf die jeweils benötigten Abmessungen zugeschnitten werden, so dass nur ein "Rohling" nötig ist, der dann in der gewünschten Weise konfektioniert wird.

Die Einlage ist insbesondere für Elektromontagedosen zum Einbau in Trockenbauwänden geeignet. Trockenbauwände werden häufig auch als Brandwände im Innenausbau von öffentlichen Gebäuden, Schulen, Krankenhäusern und Bürohäusern verwendet. Durch ihre besonderen Eigenschaften, ihre teils speziellen Einsatzgebiete und aufgrund ihrer Beschaffenheit stellen Trockenbauwände eine besondere Anforderung an die verwendeten Elektromontagedosen und deren Brandschutzsystem. Die Einlage deckt diese speziellen Anforderungen ab und ist auch für den Einsatz in zum Einbau in Trockenbauwände geeigneten Elektromontagedosen verwendbar. Die Einlage ist vorzugsweise in Form einer Matte mit einer definierten Stärke ausgebildet. Die Einlage weist ein Trägermaterial auf, das zum Aufnehmen mindestens einer intumeszierenden Schicht geeignet ist. Das Trägermaterial kann beispielsweise aus einem Metall oder einem Kunststoff bestehen. Die mindestens eine intumeszierende Schicht kann als eine Beschichtung auf das Trägermaterial aufgebracht sein. Alternativ oder zusätzlich kann die intumeszierende Schicht auf das Trägermaterial geklebt oder gerollt sein. Das Trägermaterial kann auch formschlüssig oder kraftschlüssig die intumeszierende Schicht umgreifen bzw. eine Sandwichbauweise mit der intumeszierenden Schicht bilden. Die intumeszierende Schicht ist derart ausgebildet, dass sie bei Hitzeeinwirkung, optimalerweise in einem Brandfall, an Volumen zunimmt und an Dichte abnimmt oder ein Kühlstoff wie beispielsweise Wasserdampf freisetzt. Hierdurch können die Komponenten innerhalb der Elektromontagedose von der intumeszierenden Schicht vor Hitzeeinwirkung geschützt und eine Ausbreitung eines Feuers durch die Elektromontagedose unterbunden werden. Durch eine derartige Einlage bzw. Inlay können Elektromontagedosen mit unterschiedlicher länderspezifischer Abmessungen und Gestaltungen vor dem Einbau von Installationskomponenten wie beispielsweise elektrischen Leitungen, Schaltern und Steckdosen mit einem brandsicheren Schutz ausgelegt werden. Dabei kann die Einlage aufgrund der flexiblen Anpassungseigenschaften unabhängig von dem Typ der Elektromontagedose verwendet werden. Die Einlage ist derart ausgestaltet, dass sie sich durch plastische Verformung, beispielsweise durch Knicken oder Verbiegen, an die unterschiedlichen Elektromontagedosen angepasst werden und die Innenfläche einer Elektromontagedose auskleiden kann. Eine an eine Elektromontagedose angepasste Einlage kann hierbei nach einer definierten Zeitspanne die eingenommene Form dauerhaft einnehmen oder dauerhaft plastisch verformbar bleiben. Die Einlage kann vorzugsweise für eine bestimmte Elektromontagedose vorkonfektioniert sein oder als eine Matte oder als Meterware nachträglich von einem Anwender zuschneidbar oder konfektionierbar sein.

Vorzugsweise besteht das Trägermaterial aus Metall, so dass sich eine plastische Verformbarkeit mit hoher Temperaturbeständigkeit vereinen lässt.

Gemäß einem Ausführungsbeispiel ist das Trägermaterial der Einlage eine Metallfolie oder ein Metallblech. Durch die Wahl der Art und der Dicke des als Trägermaterials dienenden Metalls kann die plastische Verformbarkeit der Einlage beeinflusst werden. Die Verwendung einer dünnen Metallfolie als Trägermaterial kann dabei eine hohe Flexibilität der Einlage bieten. Die Verwendung eines Metallblechs kann hingegen je nach Dicke des Metallblechs die Verfolgbarkeit verringern, jedoch eine gewisse Klemmwirkung in der Elektromontagedose entwickeln und zusätzliche Stabilität für sich und die Elektromontagedose bieten. So kann sich die Einlage beispielsweise kraftschlüssig mit der Elektromontagedose verklemmen. Da Elektromontagedosen üblicherweise aus einem Kunststoff bestehen kann das metallische Trägermaterial im Brandfall die Elektromontagedose mechanisch verstärken und ein Verformen der Elektromontagedose aufgrund von Hitzeeinwirkung verringern oder verhindern.

Nach einem weiteren Ausführungsbeispiel ist das Trägermaterial ein Metallgitter oder ein Metallgewebe. Dies ermöglicht gegenüber der Metallfolie mehr Stabilität und gegenüber dem Metallblech mehr Flexibilität und ein geringeres Gewicht der fertigen Einlage. Beispielsweise kann als Metallgitter ein Streckmetallgitter verwendet werden. Bei der Verwendung eines Gitters bzw. eines Gewebes kann die intumeszierende Schicht bei einem Aufbringen auf das Trägermaterial das Trägermaterial durch die Öffnungen bzw. Geflecht durchziehen und eine stabile Verbindung eingehen.

Gemäß einem weiteren Ausführungsbeispiel ist die intumeszierende Schicht auf das Trägermaterial zumindest einseitig auftragbar oder das Trägermaterial von der intumeszierenden Schicht zumindest bereichsweise umschließbar. Die intumeszierende Schicht kann dabei ein oder beidseitig auf das Trägermaterial gerollt, gesprüht, gegossen oder gestrichen werden. Hierdurch kann eine derartige Einlage auf verschiedene Arten hergestellt werden. Alternativ könnte das Trägermaterial durch einen Tauch- und anschließendes Trocknungsverfahren mit der intumeszierenden Schicht versehen werden. Auf diese Art ist eine vollständige und sichere Umschließung des Trägermaterials durch die intumeszierende Schicht gewährleistet.

Nach einem weiteren Ausführungsbeispiel weißt die Einlage eine maximale Dicke von weniger als 4 mm auf. Hierdurch wird gewährleistet, dass die Einlage in allen sich derzeit auf dem Markt befindenden Elektromontagedosen einen so geringfügigen Platz einnimmt, dass Schalter- und Steckdosenelemente weiterhin problemlos in den Elektromontagedosen eingebaut werden können. Der Einbauraum der Schalter- und Steckdosenelemente wird somit durch die Verwendung der brandschutzsicheren Einlage nur geringfügig verkleinert. Die Art der Schalter- und Steckdosenelemente sowie der Elektromontagedose ist dabei ohne Bedeutung. Die Einlage kann für alle in Europa erhältlichen Elektromontagedosen und Schalter- bzw. Steckdosensysteme verwendet werden und ist individuell an die jeweilige Form der Elektromontagedosen anpassbar.

Gemäß einer bevorzugten Ausführungsform weist die Einlage mindestens zwei einander gegenüberliegende Arme auf, so dass sie formschlüssig in rechteckig oder runde geformte Elektromontagedosen einbringbar ist. Die Arme können sich an gegenüberliegenden Wänden der Elektromontagedose abstützen, wobei die Einlage aufgrund der plastischen Verformbarkeit problemlos an individuelle Formen verschiedener Elektromontagedosen angepasst werden kann, so dass sie die Elektromontagedose passgenau auskleidet. Mögliche Hohlräume zwischen der Einlage und der Elektromontagedose können somit verhindert werden, so dass der durch die Einlage erzeugte Brandschutz direkt auf der Innenfläche der Elektromontagedose aufliegt.

Nach einem weiteren Ausführungsbeispiel ist die Länge der Arme größer als die Tiefe der Elektromontagedose. Dies führt dazu, dass die Einlage im in die Elektromontage eingesetzten Zustand zumindest bereichsweise über einen Rand einer Wand der Elektrodemontagedose hinausragt. Durch die Installationskomponenten wie Schalter oder Steckdosen kann die Einlage in der Elektromontagedose fixiert werden. Dabei kann die Einlage zwischen der Elektrodose und den Installationskomponenten zur Fixierung eingeklemmt sein. Alternativ könnte die Einlage auch in die Elektromontagedose eingeklebt sein oder durch gemeinsame Schrauben mit Installationskomponenten in der Elektromontagedose mit fixiert werden. Das Überstehen der Einlage über den Rand der Elektromontagedose hinaus gewährleistet, dass der Brandschutz für die gesamte Innenfläche der Elektromontagedose gewährleistet ist und auch die Randbereiche der Elektromontagedose vor Feuereinwirkung geschützt sind. Insbesondere kann ein Verschluss der Elektromontagedose oder eine aufgesetzte Steckdose oder ein Schalter die hinausragenden Bereiche der Einlage zwischen sich und einer Wand bzw. einem Rand der Elektromontagedose einklemmen und eine optimale Dichtwirkung erzielen.

Nach einem weiteren Aspekt der Erfindung wird ein Verfahren zum Herstellen einer Einlage bereitgestellt. Hierzu wird ein plastisch verformbares Trägermaterial bereitgestellt, mindestens eine intumeszierende Schicht auf das bereitgestellte Trägermaterial aufgebracht und anschließend verfestigt wird, insbesondere durch Trocknen oder Aushärten.

Die intumeszierenden Schicht kann ein- oder beidseitig auf das Trägermaterial gespritzt, gegossen, gerollt oder gestrichen werden. Alternativ kann das Trägermaterial auch in ein geschmolzenes oder flüssiges intumeszierendes Material getaucht und hiervon vollständig umschlossen werden. Nach dem Auftrag findet vorzugsweise ein Trocknungs- oder Aushärtungsprozess statt. Beispielsweise kann eine intumeszierende Schicht in einem Zwei- oder Ein-Komponenten Spritzgussverfahren auf das Trägermaterial aufgebracht werden. Hierbei kann ein intumeszierender Thermoplast verwendet werden. Alternativ kann ein Reaction Injection Moulding (RIM) Verfahren mit einer mehrteiligen intumeszierenden Reaktionsmasse zum Aufbringen der mindestens einen intumeszierenden Schicht auf das Trägermaterial. Eine derart hergestellte Einlage ist durch das plastisch verformbare Trägermaterial ebenfalls plastisch verformbar. Somit kann die Einlage Vorort oder im Vorfeld an eine Elektromontagedose angepasst werden. Hierzu kann die Einlage geschnitten und verbogen werden um die Einlage an Komponenten innerhalb der Elektromontagedose und an die innere Geometrie der Elektromontagedose anzupassen.

Gemäß einem weiteren Ausführungsbeispiel wird das Trägermaterial vorkonfektioniert bereitgestellt wird oder die Einlage nachträglich konfektioniert. Die bevorzugte Form kann dabei während des Herstellungsprozesses durch Ausschneiden, Perforieren oder Stanzen des Trägermaterials gewählt werden. Ist die bevorzugte Form die endgültige Form der fertigen Einlage, so ist diese unmittelbar einsatzfähig. Alternativ könnten mehrere Einlagen zusammenhängend im Set geformt und beispielsweise über eine Perforation miteinander verbunden sein. Ein Verbraucher könnte dann je nach Bedarf eine der Einlagen von den anderen abtrennen. Des Weiteren könnte die Einlage als flächige Matte oder als Meterware in Form einer Rolle hergestellt werden, so dass die Größe einer Einlage individuell aus der flächigen Matte heraus geschnitten werden kann. Dabei kann die Form der jeweiligen Einlage beispielsweise durch eine Perforation oder einen Aufdruck vorbestimmt oder je nach Anforderung frei von Vorgaben individuell bestimmt werden.

Nach einem weiteren Aspekt der Erfindung wird eine Elektromontagedose mit einer plastisch verformbaren Einlage bereitgestellt, wobei die Einlage an einen Innenbereich der Elektromontagedose anpassbar ist. Durch die plastisch verformbare Einlage kann diese unabhängig von einer Innengeometrie der Elektromontagedose derart angepasst werden, dass keine Hohlräume zwischen der Einlage und einer Wandung der Elektromontagedose entstehen. Die Einlage kann stets passgenau in die Elektromontagedose eingelegt werden. Überschüssiges Material der Einlage kann entweder zwecks Abdichtung der Elektromontagedose bleiben oder abgeschnitten werden.

Im Folgenden werden anhand von stark vereinfachten schematischen Darstellungen bevorzugte Ausführungsbeispiele der Erfindung näher erläutert. Hierbei zeigen
- Fig. 1a: einen schematischen Querschnitt einer Einlage gemäß einem ersten Ausführungsbeispiel,
- Fig. 1b: einen schematischen Querschnitt einer Einlage gemäß einem zweiten Ausführungsbeispiel,
- Fig. 2a: eine schematische Draufsicht auf eine Matte zum Ausschneiden von mindestens einer Einlage gemäß einer ersten Ausführungsform,
- Fig. 2b: eine schematische Draufsicht auf eine Matte mit einer Mehrzahl an Einlagen gemäß einer zweiten Ausführungsform,
- Fig. 3: eine schematische Draufsicht auf eine Einlage gemäß der zweiten Ausführungsform,
- Fig. 4a: eine schematische Draufsicht auf eine Elektromontagedose mit einer Einlage gemäß der zweiten Ausführungsform, und
- Fig. 4b: einen schematischen Querschnitt der Elektromontagedose mit einer Einlage gemäß der zweiten Ausführungsform.

In den Figuren weisen dieselben konstruktiven Elemente jeweils dieselben Bezugsziffern auf.

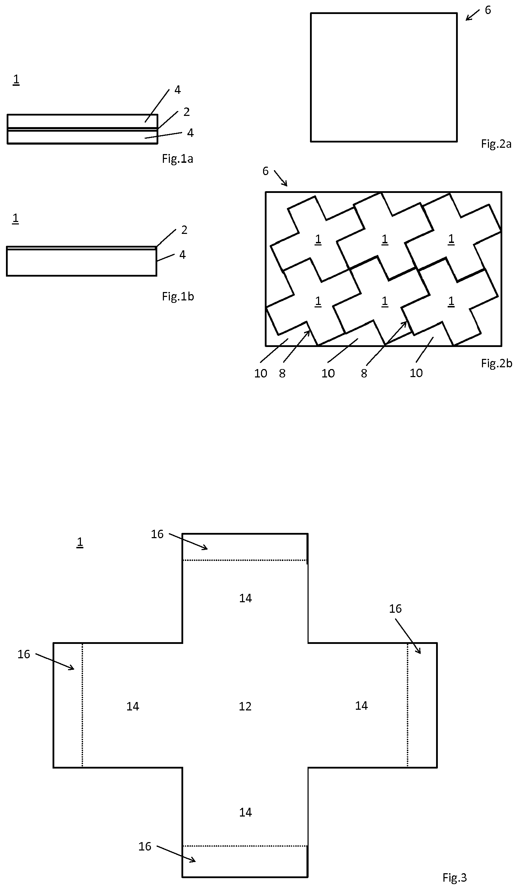

Die Figur 1a zeigt einen Querschnitt einer Einlage 1 gemäß dem ersten Ausführungsbeispiel. Die Einlage 1 weist ein mittig angeordnetes Trägermaterial 2 auf. Das Trägermaterial 2 ist hier ein Metallgitter. Beidseitig der Trägerschicht 2 ist jeweils eine intumeszierende Schicht 4 angeordnet. Die intumeszierenden Schichten 4 bilden hierbei eine Oberseite und eine Unterseite der Einlage 1. Da das Trägermaterial 2 ein Metallgitter ist, besteht zwischen der Oberseite und der Unterseite eine Vielzahl an Verbindungen durch nicht gezeigte Maschen des Metallgitters 2. Die Einlage 1 ist hier als eine flächigen Matte 6 ausgebildet, die durch einen Anwender individuell zugeschnitten bzw. konfektioniert werden kann.

In der Figur 1b ist ein Querschnitt der Einlage 1 gemäß einem zweiten Ausführungsbeispiel gezeigt. Das Trägermaterial 2 der Einlage 1 ist dabei nur einseitig mit einer intumeszierenden Schicht 4 versehen. Das Trägermaterial 2 ist gemäß dem Ausführungsbeispiel ein Metallblech. Die intumeszierende Schicht 4 wurde beispielsweise durch ein Spritzgussverfahren auf das Trägermaterial 2 aufgebracht und ausgehärtet.

Die Figur 2a zeigt eine schematische Draufsicht auf eine Matte 6 zum Ausschneiden von mindestens einer Einlage 1 gemäß einer ersten Ausführungsform. Die Matte 6 weist eine quadratische Grundfläche auf und ist für individuellen Zuschnitt vorbereitet. Beispielsweise kann die Matte 6 mit einer Schere derart konfektioniert werden, dass mehrere Einlagen 1 aus der Matte 6 geschnitten werden können. Durch diese Art der Gestaltung der Einlage ist keine spezielle Form der endgültigen Einlage 1 vorgegeben. Die Einlage 1 kann hierbei von einem Anwender individuell gestaltet und zugeschnitten werden.

In der Figur 2b ist eine schematische Draufsicht auf eine Matte 6 mit einer Mehrzahl an Einlagen 1 gemäß einer zweiten Ausführungsform dargestellt. Hierbei weist die Matte 6 eine rechteckige Grundfläche auf und ist bei der Herstellung perforiert worden. Durch mehrere Perforationen 8 lassen sich hier sechs gleichförmige Einlagen 1 aus der Matte 6 heraustrennen. Die Einlagen 1 sind gemäß dem Ausführungsbeispiel kreuzförmig ausgeführt. Nach dem Heraustrennen der Einlagen 1 bleibt ein Rest 10 der Matte 6 über. Eine Einlage 1 kann auch aus mehreren kleineren Einzelsteilen bestehen, die beispielsweise aus dem Rest 10 der Matte 6 gebildet werden können.

Die Figur 3 zeigt eine schematische Draufsicht auf eine Einlage 1 gemäß der zweiten Ausführungsform, wobei die Einlage von den anderen Einlagen der Matte 6 getrennt ist.

Die Einlage 1 ist in der Draufsicht kreuzförmig geformt und wurde aus der Matte 6 aus der Figur 2b entnommen. Die Einlage 1 weist einen zentralen Bereich 12 auf, von dem vier Arme 14 ausgehen. Die Arme 14 weisen endseitig jeweils einen Sicherheitsrand 16 auf, der als ein Überlappbereich 16 ausgeführt ist und Fertigungstoleranzen ausgleichen kann und als zusätzliche Dichtung dient.

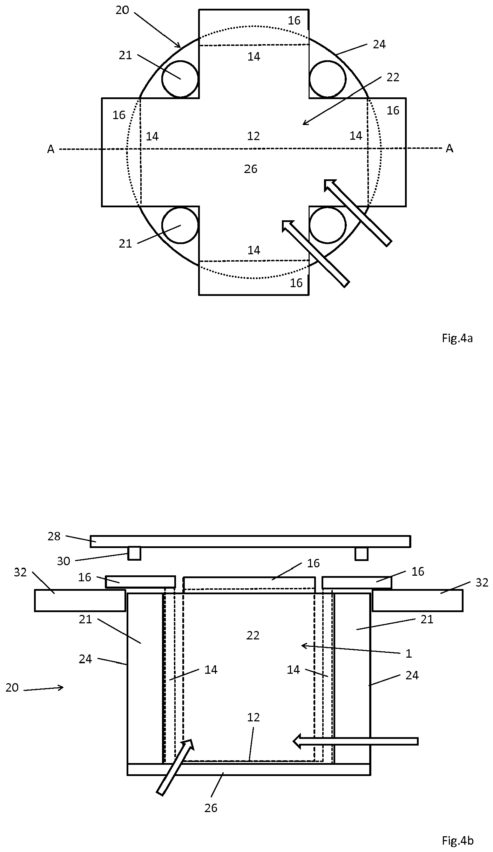

In der Figur 4a ist eine schematische Draufsicht auf eine Elektromontagedose 20 mit einer Einlage 1 gemäß der zweiten Ausführungsform gezeigt. Die Elektromontagedose 20 ist zylinderförmig ausgeführt und weist vier Gewindebereiche 21 zum Aufnehmen von Schrauben auf. Die Elektromontagedose 20 weist einen Innenbereich 22 auf zum Aufnehmen von nicht gezeigten Komponenten und Kabeln, der von einem Rand 24 der Elektromontagedose 20 begrenzt ist.

In die Elektromontagedose 20 ist eine Einlage 1 gemäß der in Figur 3 gezeigten zweiten Ausführungsform eingesetzt. Hierfür wurden die Arme 14 der Einlage 1 um 90° verbogen. Die Einlage 1 ist derart in der Elektromontagedose 20 positioniert, dass der zentrale Bereich 12 der Einlage 1 auf einem Boden 26 der Elektromontagedose 20 aufliegt. Durch das Verbiegen verlaufen die Arme 14 vorzugsweise parallel zu der Wand 24 der Elektromontagedose 20.

Die jeweiligen Überlappbereiche 16 der Arme 14 ragen aus der Elektromontagedose 20 hinaus und sind ebenfalls in einem 90° Winkel derart gebogen, dass der Rand 24 der Elektromontagedose 20 durch die Überlappbereiche 16 zumindest bereichsweise verdeckt ist.

In den durch die Einlage 1 brandgeschützten Innenbereich 22 der Elektromontagedose 20 können Kabel zwischen den Armen 14 der Einlage 1 hineingeleitet werden. Dies verdeutlichen die Pfeile zusätzlich. Alternativ oder zusätzlich können zum Verlegen von Kabeln in die Einlage 1 Schlitze oder Öffnungen eingebracht werden.

Die Figur 4b zeigt einen schematischen Querschnitt der Elektromontagedose 20 aus der Figur 4a entlang der Linie A-A. Die Figur verdeutlicht insbesondere die Einlage 1 im eingesetzten Zustand im Innenbereich 22 der Elektromontagedose 20. Die Arme 14 verlaufen parallel zur Wand 24 der Elektromontagedose 20 und ragen im Überlappbereich 16 aus der Elektromontagedose 20 hinaus. Die Überlappbereiche 16 sind jeweils in einem 90° Winkel zur Wand 24 der Elektromontagedose 20 gebogen und verlaufen somit parallel zu einer Wand 32, die gemäß dem Ausführungsbeispiel eine Hohlraumwand 32 ist.

Ein Deckel 28 kann die Elektromontagedose 20 verschließen und zwischen dem Deckel 28 und der Wand 24 der Elektromontagedose 20 die überstehenden Überlappbereiche 16 der Einlage 1 einklemmen. Der Deckel 28 kann beispielsweise über Rastnasen 30 mit der Wand 24 der Elektromontagedose 20 eine formschlüssige Verbindung eingehen. Hierdurch werden nicht nur die Elektromontagedose 20, sondern auch mögliche Spalte zwischen der Elektromontagedose 20 und der Wand 32 zumindest bereichsweise abgedichtet. Die Pfeile zeigen analog zur vorhergehenden Figur Verlegemöglichkeiten für Kabel in die Elektromontagedose 20 hinein.

## Patentansprüche

1. Einlage (1) als Brandschutz von mindestens einer Elektromontagedose (20) mit einem Trägermaterial (2) und mindestens einer intumeszierenden Schicht (4), **dadurch gekennzeichnet, dass** das Trägermaterial (2) und die intumeszierende Schicht (4) plastisch verformbar sind.

2. Einlage nach Anspruch 1, **dadurch gekennzeichnet, dass** das Trägermaterial (2) aus Metall besteht.

3. Einlage nach Anspruch 2, **dadurch gekennzeichnet, dass** das Trägermaterial (4) eine Metallfolie oder ein Metallblech ist.

4. Einlage nach Anspruch 2, **dadurch gekennzeichnet, dass** das Trägermaterial (4) ein Metallgitter oder ein Metallgewebe ist.

5. Einlage nach einem der Ansprüche 1 bis 4, **dadurch gekennzeichnet, dass** die intumeszierende Schicht (4) einseitig auf dem Trägermaterial (2) aufgetragen ist.

6. Einlage nach einem der Ansprüche 1 bis 4, **dadurch gekennzeichnet, dass** die intumeszierende Schicht (4) sich auf beiden Seiten des Trägermaterials (2) befindet.

7. Einlage nach einem der Ansprüche 1 bis 6, **dadurch gekennzeichnet, dass** sie eine Dicke von weniger als 4mm aufweist.

8. Einlage nach einem der Ansprüche 1 bis 7, **dadurch gekennzeichnet, dass** sie zwei einander gegenüberliegende Arme (14) aufweist, so dass sie formschlüssig in eine rechteckig oder rund geformte Elektromontagedose (20) einbringbar ist.

9. Einlage nach Anspruch 8, **dadurch gekennzeichnet, dass** die Länge der Arme (14) größer ist als die Tiefe der der Elektromontagedose (20).

10. Verfahren zum Herstellen einer Einlage (1) nach einem der vorhergehenden Ansprüche, aufweisend die Schritte:
- Bereitstellen eines plastisch verformbaren Trägermaterials (2),
- Aufbringen mindestens einer intumeszierenden Schicht (4) zumindest bereichsweise auf das bereitgestellte Trägermaterial (2)
- Verfestigen der aufgebrachten intumeszierenden Schicht (2), insbesondere durch Trocknen oder Aushärten.

11. Verfahren nach Anspruch 10, **dadurch gekennzeichnet, dass** das Trägermaterial (2) vorkonfektioniert bereitgestellt wird.

12. Verfahren nach Anspruch 10, **dadurch gekennzeichnet, dass** die Einlage (1) nachträglich konfektioniert wird.

13. Elektromontagedose (20) mit einer plastisch verformbaren Einlage (1) nach einem der Ansprüche 1 bis 9 hergestellt durch ein Verfahren nach einem der Ansprüche 10 und 11, wobei die Einlage (1) sich entlang den Wänden der Elektromontagedose (20) auf deren Innenseite (22) erstreckt.
